# EUROPEAN PATENT SPECIFICATION

(11) **EP 3 502 423 B1**
(45) Date of publication and mention of the grant of the patent: **26.01.2022**
(21) Application number: 18213929.5
(22) Date of filing: 19.12.2018
(51) Int. Cl.: F01D 17/14, F01D 25/24, F02C 9/18, F16K 1/22, F16K 27/02

(54) **ADDITIVELY MANUFACTURED INTEGRATED VALVE AND ACTUATOR HOUSING FOR A GAS TURBINE ENGINE**
ADDITIV GEFERTIGTES INTEGRIERTES VENTIL UND STELLGLIED GEHÄUSE FÜR EINEN GASTURBINENMOTOR
CARTER DE SOUPAPE ET ACTIONNEUR INTÉGRÉS FABRIQUÉS DE MANIÈRE ADDITIVE POUR UN MOTEUR DE TURBINE À GAZ

(30) Priority: 21.12.2017 US 201715850520
(43) Date of publication of application: 26.06.2019
(73) Proprietor: Hamilton Sundstrand Corporation, Charlotte, NC 28217-4578 (US)
(72) Inventor: ELDER, James S., South Windsor, MA Massachusetts 06074 (US); KOWALSKI, John W., Hadley, MA Massachusetts 01035 (US); SANDU, Codrin Dan, Bayside, NY New York 11361 (US)
(74) Representative: Dehns

(56) References cited:
- US-A- 3 771 759
- US-A1- 2007 102 049
- US-B2- 8 613 198

## Description

### TECHNICAL FIELD

The present disclosure relates generally to valve and actuator assemblies for a gas turbine engine, and more specifically to an additively manufactured valve and actuator assembly having a single integrated housing body.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

Gas turbine engines typically include one or more engine air provision and regulation components, such as a regulating valve. The provision and regulation components are utilized to regulate the flow of engine air between various portions of the engine.

US 8613198 B2 relates to a method and apparatus used to regulate fluid flow for a gas turbine engine. US 3771759 A relates to controlling flow of fluids.

### SUMMARY OF THE INVENTION

According to the invention an engine air valve assembly for a gas turbine engine is provided as claimed in claim 1 and includes a butterfly valve including a translation shaft, a fueldraulic actuator including a piston, the piston being mechanically linked to the translation shaft by an axial to rotational conversion linkage, and an additively manufactured regulating valve housing containing the butterfly valve and the fueldraulic actuator, the regulating valve housing comprising an actuator housing portion and a valve housing portion joined via a joint section, the regulating valve housing being a single integral piece and the translation shaft extending through the joint section.

A method for assembling an engine air valve according to the invention is provided as claimed in claim 10 and includes additively manufacturing the regulating valve housing as a single integral piece, and inserting a butterfly valve in the valve housing portion, a fueldraulic actuator piston in the actuator portion, and a translation shaft connecting the butterfly valve to the fueldraulic actuator piston.

These and other features of the present invention can be best understood from the following specification and drawings, the following of which is a brief description.

### BRIEF DESCRIPTION OF THE DRAWINGS

Figure 1 illustrates a high level schematic view of an gas turbine engine.
Figure 2 schematically illustrates an isometric view of an additively manufactured fueldraulic valve assembly.
Figure 3 schematically illustrates a cross sectional view of the fueldraulic valve assembly of Figure 2.
Figure 4 schematically illustrates an end view of the fueldraulic valve assembly of Figure 2.

### DETAILED DESCRIPTION OF AN EMBODIMENT

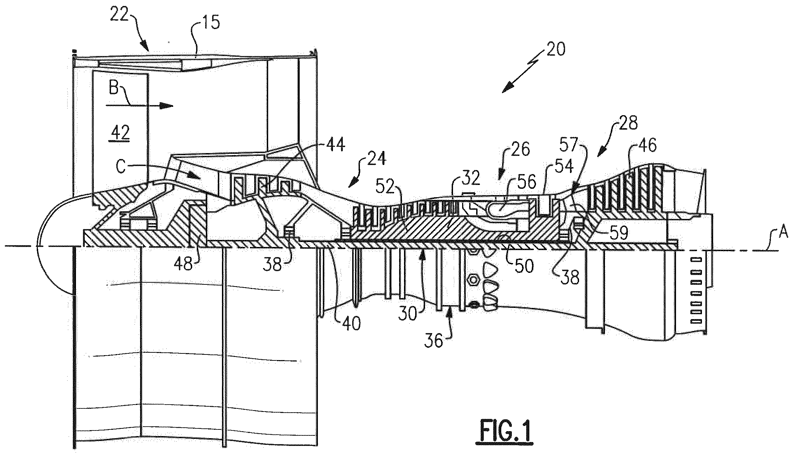

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 meters (35,000 feet). The flight condition of 0.8 Mach and 10,668 meters (35,000 ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [((Tram °C+273.15) x 9/5)/(15.0°C)]^^{0.5} [(Tram °R) / (518.7 °R)]^^{0.5}. The "Low corrected fan tip speed" as disclosed herein according to one non-limiting embodiment is less than about 350.5 meters/second (1150 ft / second).

Existing gas turbine engines, such as turbofan engines, utilize internal engine components to direct flows of engine air from one portion of the engine to another portion of the engine. One component used to control and direct flows of engine air is a fueldraulic valve. Existing fueldraulic valves utilize a two part construction including a fireproof valve housing connected to an actuator housing via fasteners joining a pair of corresponding joint flanges. The fireproof valve housing is typically constructed of steel, or another high melting point material in order to facilitate the high temperature engine air passing through the valve housing. A valve is housed in the valve housing and controls a flow of engine air through the valve housing.

In contrast, the actuator housing is not required to accommodate high temperature air and is constructed of aluminum in order to reduce the overall weight of the component. A shaft extends from the actuator housing into the valve housing, allowing a piston shaft within the actuator to control a position of the valve, and thereby control the magnitude of engine air allowed to pass through the valve.

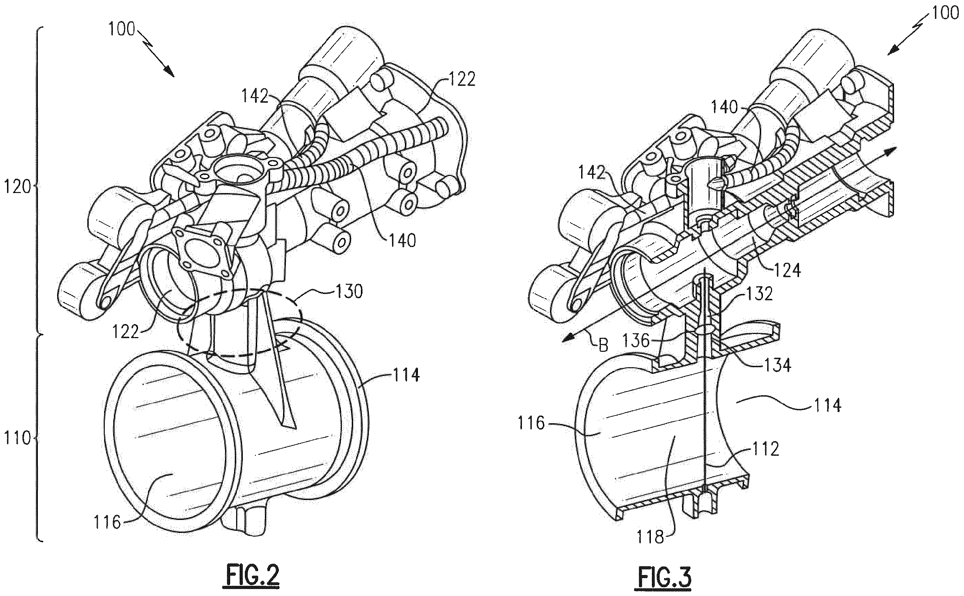

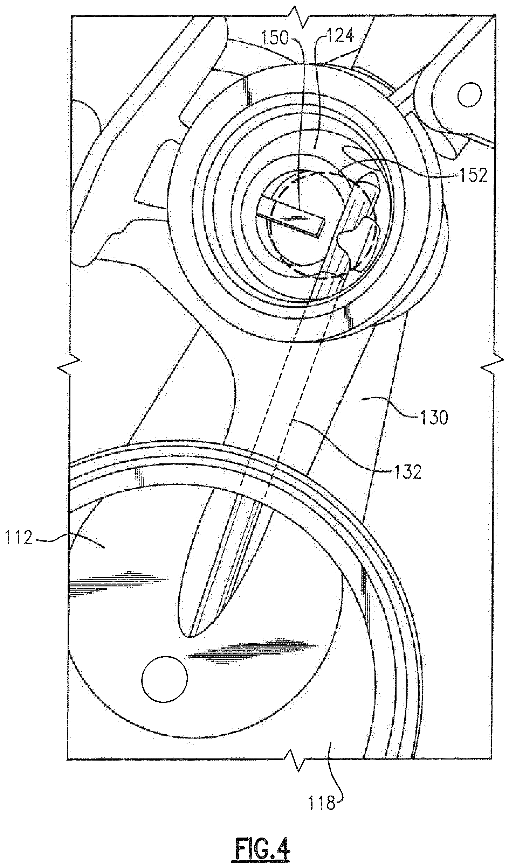

With continued reference to Figure 1, Figure 2 schematically illustrates an isometric view of a fueldraulic valve assembly 100 including a combined valve housing 110 and actuator housing 120. The valve housing 110 and the actuator housing 120 are joined via a joint section 130 including a pass-through passage 134 (illustrated in Figure 3) that allows a translation shaft 132 (illustrated in Figure 3) to connect a fueldraulicly actuated piston 150 (illustrated in Figure 4) in the actuator housing 120 to a butterfly valve 112 (illustrated in Figure 4) disposed within the valve housing 110. The valve housing 110, the joint section 130, and the actuator housing 120 are a single integral body, constructed via an additive manufacturing process. As used herein, an integral body refers to a body constructed as a single piece, rather than as multiple pieces joined together.

In some examples, the additive manufacturing process can create the singular body using a single uniform material such as titanium, or a titanium alloy. In alternative examples, the singular body can be created of a composition of multiple materials including titanium. In further examples, the specific material from which the entire body is constructed is Ti-64. Construction of either, or both, of the component parts of the previous examples using titanium alloys and a casting or milling process is cost prohibitive, especially when design changes are anticipated, for small production quantities, and/or for demonstration hardware. Further, even if the high cost of cast or milled titanium were warranted, the process of casting and milling the component parts out of titanium results in an excessively lengthy manufacturing process.

By integrating the valve housing 110 and the actuator housing 120 into a single body, and using additively manufactured construction with a titanium material, the weight of the valve assembly 100 is reduced relative to previous distinct bodies for the valve housing 110 and the actuator housing 120. By way of example, a single body titanium based valve assembly 100 can weigh in the range of 1.38 - 1.12 kg (3.05 - 2.49 lbs). In some practical examples, the single body titanium assembly can weigh in the range of 1.32 - 1.19 kg (2.91-2.63 lbs). In yet further examples, such as the example where the valve assembly 100 is constructed of Ti-64, the valve assembly 100 can weigh approximately 1.26 kg) 2.77 lbs.

With continued reference to Figures 1 and 2, and with like numerals indicating like elements, Figure 3 schematically illustrates a cross sectional view of the fueldraulic valve assembly 100 of Figure 2. The fueldraulic valve assembly 100 includes connections 122 to a fuel source, with the connections 122 being joined via a piston shaft chamber 124. The piston shaft chamber 124 houses a piston (omitted for illustrative clarity) that is shifted along an axis B defined by the piston shaft chamber 124 utilizing pressurized fuel contained within the piston shaft chamber 124. The piston 150 is connected to a butterfly valve 112 disposed in the valve housing 110 by a translation shaft 132. The piston 150 is shifted axially by controlling the relative pressure of the fuel at each end of the piston shaft chamber 124 in a conventional hydraulic manner, with the fuel operating as the hydraulic fluid. The translation shaft 132 converts axial movement of the piston shaft into rotational movement of the butterfly valve 112.

The valve housing 110 includes a first opening 114 and a second opening 116 joined by an engine air flowpath 118. In order to prevent pressurized fuel from traveling from the piston shaft chamber 124 to the engine air flowpath 118, a seal 136 is disposed within the through passage 134, and seals against the translation shaft 132. In some examples the seal is an O-ring type seal manufactured from fluorocarbon. In alternative examples, fluorosilicone seal types could be utilized in place of the O-ring type seal.

A further benefit of constructing the assembly 100 via the additive manufacturing process is the integrated inclusion of snaking plumbing lines 140, 142 into the valve assembly 100. The actuator housing 120 further includes multiple integral plumbing lines 140, 142. The integral plumbing lines 140, 142 allow for a controller to adjust the pressure on each axial end of the piston shaft chamber 124 by allowing the amount of fuel at each end of the piston shaft chamber 124 to be controlled and adjusted. Existing systems, utilizing cast or milled construction techniques, provide for plumbing lines by incorporating plumbing stubs, and drilling into the finished part at the stubs during a post manufacturing procedure. Plumbing lines are then connected to the stubs and allow for the desired fluid transfer.

In contrast to existing systems, the additively manufactured assembly 100 manufactures the plumbing lines 140, 142 integral to the actuator housing 120 and from the same material as the actuator housing 120 during the additive manufacturing process. By incorporating the plumbing lines 140, 142 into the housing itself, the weight of the valve assembly 100 is further reduced, and complexity of manufacturing is reduced.

With continued reference to Figures 1-3, Figure 4 schematically illustrates an end view of the fueldraulic valve assembly 100 of Figure 2. The illustration of Figure 4 shows the butterfly valve 112 disposed within the engine air flowpath 118. In one example, the butterfly valve is a three inch diameter butterfly valve. The butterfly valve 112 is connected to the translation shaft 132, which is in turn connected to a piston 150 via an axial to rotational movement joint 152. As the piston 150 shifts along the axis defined by the piston shaft chamber 124, the axial to rotational movement joint 152 causes the translation shaft 132 to rotate about the axis of the translation shaft 132. Since the butterfly valve 112 is fixedly connected to the translation shaft 132, the rotation of the translation shaft 132 causes an equivalent rotation in the butterfly valve 112.

It should be appreciated that the rotational position of the translation shaft 132, and of the butterfly valve 112, can be controlled via a standard controller, a dedicated controller, or any other known control system according to known hydraulic piston positioning techniques.

The following claims should be studied to determine the true scope and content of this invention.

## Claims

1. An engine air valve assembly (100) for a gas turbine engine comprising:
a butterfly valve including a translation shaft;
a fueldraulic actuator including a piston (150), the piston being mechanically linked to the translation shaft (132) by an axial to rotational conversion linkage; and
an additively manufactured regulating valve housing containing the butterfly valve and the fueldraulic actuator, the regulating valve housing comprising an actuator housing portion (120) and a valve housing portion (110) joined via a joint section (130), the regulating valve housing being a single integral piece; and
wherein the translation shaft (132) extends through the joint section.

2. The engine air valve assembly of claim 1, wherein the regulating valve housing is constructed of a single material.

3. The engine air valve assembly of claim 2, wherein the single material comprises one of titanium and a titanium alloy.

4. The engine air valve assembly of claim 3, wherein the single material comprises of Ti-64, and preferably wherein the single material consists of Ti-64, Ti-6242 or Ti-Al.

5. The engine air valve assembly of claim 1, wherein the regulating valve housing weighs in the range of 1.38 - 1.13 kg (3.05-2.49 lbs), and preferably wherein the regulating valve housing weighs in the range of 1.32 - 1.19 kg (2.91-2.63 lbs), and more preferably wherein the regulating valve housing weighs approximately 1.26 kg (2.77 lbs).

6. The engine air valve assembly of claim 1, wherein the join section (130) is sealed via at least one of an O-ring type seal comprised of a fluorocarbon material.

7. The engine air valve assembly of claim 1, wherein the regulating valve housing further comprises at least one plumbing line, and wherein the at least one plumbing line is integral to the regulating valve housing.

8. The engine air valve assembly of claim 7, wherein the at least one plumbing line includes two plumbing lines (140, 142) and each of the plumbing lines is integral to the regulating valve housing.

9. The engine air valve assembly of claim 1, wherein the butterfly valve is a 7.6 cm (three inch) valve.

10. A method for assembling the engine air valve of claim 1 comprising:
additively manufacturing the regulating valve housing as a single integral piece; and
inserting a butterfly valve in the valve housing portion, a fueldraulic actuator piston in the actuator portion, and a translation shaft connecting the butterfly valve to the fueldraulic actuator piston.

11. The method of claim 10, wherein additively manufacturing the regulating valve housing comprises iteratively applying layers of a titanium based material.

12. The method of claim 11, wherein the titanium based material includes Ti-64.

13. The method of claim 12, wherein the titanium based material consists of Ti-64.

## Patentansprüche

1. Triebwerksluftventilanordnung (100) für ein Gasturbinentriebwerk, umfassend:
eine Drosselklappe, die eine Übersetzungswelle beinhaltet;
ein kraftstoffhydraulisches Stellglied, das einen Kolben (150) beinhaltet, wobei der Kolben durch eine Axial-zu-Drehumwandlungsverknüpfung mechanisch mit der Übersetzungswelle (132) verknüpft ist; und
ein additiv gefertigtes Regelventilgehäuse, das die Drosselklappe und das kraftstoffhydraulische Stellglied enthält, wobei das Regelventilgehäuse einen Stellgliedgehäuseteil (120) und einen Ventilgehäuseteil (110) umfasst, die über einen Gelenkabschnitt (130) verbunden sind, wobei das Regelventilgehäuse ein einstückig ausgebildetes Einzelstück ist; und
wobei sich die Übersetzungswelle (132) durch den Gelenkabschnitt hindurch erstreckt.

2. Triebwerksluftventilanordnung nach Anspruch 1, wobei das Regelventilgehäuse aus einem einzigen Material gebaut ist.

3. Triebwerksluftventilanordnung nach Anspruch 2, wobei das einzige Material eines von Titan und einer Titanlegierung umfasst.

4. Triebwerksluftventilanordnung nach Anspruch 3, wobei das einzige Material Ti-64 umfasst, und wobei das einzige Material bevorzugt aus Ti-64, Ti-6242 oder Ti-Al besteht.

5. Triebwerksluftventilanordnung nach Anspruch 1, wobei das Regelventilgehäuse im Bereich von 1,38 - 1,13 kg (3,05-2,49 lbs) wiegt, und wobei das Regelventilgehäuse bevorzugt im Bereich von 1,32 - 1,19 kg (2,91-2,63 lbs) wiegt, und wobei das Regelventilgehäuse stärker bevorzugt etwa 1,26 kg (2,77 lbs) wiegt.

6. Triebwerksluftventilanordnung nach Anspruch 1, wobei der Verbindenabschnitt (130) über mindestens eine von einer Dichtung vom O-Ring-Typ, die aus Fluorkohlenstoffmaterial besteht, abgedichtet ist.

7. Triebwerksluftventilanordnung nach Anspruch 1, wobei das Regelventilgehäuse ferner mindestens eine Sanitärlinie umfasst, und wobei die mindestens eine Sanitärlinie mit dem Regelventilgehäuse einstückig ausgebildet ist.

8. Triebwerksluftventilanordnung nach Anspruch 7, wobei die mindestens eine Sanitärlinie zwei Sanitärlinien (140, 142) beinhaltet und jede der Sanitärlinien einstückig mit dem Regelventilgehäuse ausgebildet ist.

9. Triebwerksluftventilanordnung nach Anspruch 1, wobei die Drosselklappe ein 7,6 cm (drei Zoll) großes Ventil ist.

10. Verfahren zur Montage des Triebwerksluftventils nach Anspruch 1, umfassend:
Additivfertigen des Regelventilgehäuses als ein einstückig ausgebildetes Einzelstück; und
Eingeben einer Drosselklappe in den Ventilgehäuseteil, eines kraftstoffhydraulischen Stellgliedkolbens in den Stellgliedteil und einer Übersetzungswelle, die die Drosselklappe mit dem kraftstoffhydraulischen Stellgliedkolben verbindet.

11. Verfahren nach Anspruch 10, wobei das Additivfertigen des Regelventilgehäuses ein iteratives Auftragen von Schichten eines Materials auf Titanbasis umfasst.

12. Verfahren nach Anspruch 11, wobei das Material auf Titanbasis Ti-64 beinhaltet.

13. Verfahren nach Anspruch 12, wobei das Material auf Titanbasis aus Ti-64 besteht.

## Revendications

1. Ensemble de soupape d'air de moteur (100) pour un moteur à turbine à gaz comprenant :
une soupape papillon comportant un arbre de translation ;
un actionneur d'alimentation de carburant comportant un piston (150), le piston étant lié mécaniquement à l'arbre de translation (132) par une liaison de conversion axiale à rotative ; et
un carter de soupape de régulation fabriqué de manière additive contenant la soupape papillon et l'actionneur d'alimentation de carburant, le carter de soupape de régulation comprenant une partie de carter d'actionneur (120) et une partie de carter de soupape (110) reliées par une section de jonction (130), le carter de soupape de régulation étant une pièce intégrale unique ; et
dans lequel l'arbre de translation (132) s'étend à travers la section de joint.

2. Ensemble de soupape d'air de moteur selon la revendication 1, dans lequel le carter de soupape de régulation est constitué d'un seul matériau.

3. Ensemble de soupape d'air de moteur selon la revendication 2, dans lequel le matériau unique comprend l'un du titane et d'un alliage de titane.

4. Ensemble de soupape d'air de moteur selon la revendication 3, dans lequel le matériau unique comprend du Ti-64, et de préférence dans lequel le matériau unique consiste en du Ti-64, du Ti-6242 ou du Ti-Al.

5. Ensemble de soupape d'air de moteur selon la revendication 1, dans lequel le carter de soupape de régulation pèse dans la plage de 1,38 à 1,13 kg (3,05 à 2,49 livres), et de préférence dans lequel le carter de soupape de régulation pèse dans la plage de 1,32 à 1,19 kg (2,91 à 2,63 livres), et plus préférablement dans lequel le carter de soupape de régulation pèse approximativement 1,26 kg (2,77 livres).

6. Ensemble de soupape d'air de moteur selon la revendication 1, dans lequel la section de jonction (130) est scellée par l'intermédiaire d'au moins l'un d'un joint de type joint torique constitué d'un matériau fluorocarboné.

7. Ensemble de soupape d'air de moteur selon la revendication 1, dans lequel le carter de soupape de régulation comprend en outre au moins une conduite de plomberie, et dans lequel l'au moins une conduite de plomberie fait partie intégrante du carter de soupape de régulation.

8. Ensemble de soupape d'air de moteur selon la revendication 7, dans lequel l'au moins une conduite de plomberie comporte deux conduites de plomberie (140, 142) et chacune des conduites de plomberie fait partie intégrante du carter de soupape de régulation.

9. Ensemble de soupape d'air de moteur selon la revendication 1, dans lequel la soupape papillon est une soupape de 7,6 cm (trois pouces).

10. Procédé d'assemblage de la soupape d'air de moteur selon la revendication 1, comprenant :
la fabrication additive du carter de soupape de régulation sous la forme d'une pièce intégrale unique ; et
l'insertion d'une soupape papillon dans la partie de carter de soupape, d'un piston d'actionneur d'alimentation de carburant dans la partie actionneur et d'un arbre de translation reliant la soupape papillon au piston d'actionneur d'alimentation de carburant.

11. Procédé selon la revendication 10, dans lequel la fabrication additive du carter de soupape de régulation comprend l'application itérative de couches d'un matériau à base de titane.

12. Procédé selon la revendication 11, dans lequel le matériau à base de titane comporte du Ti-64.

13. Procédé selon la revendication 12, dans lequel le matériau à base de titane est constitué de Ti-64.
